# EUROPEAN PATENT APPLICATION

(11) **EP 3 091 710 A1**
(43) Date of publication of application: **09.11.2016**
(21) Application number: 16168500.3
(22) Date of filing: 05.05.2016
(51) Int. Cl.: H04L 29/06, H04W 12/04

(54) **EFFICIENT CELLULAR NETWORK SECURITY CONFIGURATION**

(30) Priority: 06.05.2015 GB 201507708
(71) Applicant: Vodafone IP Licensing Limited, Newbury, Berkshire RG14 2FN (GB)
(72) Inventor: BABBAGE, Stephen, London, W2 6BY (GB)
(74) Representative: Boult Wade Tennant

(57) **Abstract**

Security key management is provided between a cellular network and a mobile terminal. The mobile terminal and an authentication management node of the cellular network both store a common security key. A key management message is communicated between the cellular network and the mobile terminal. In response to the communication, an intermediate security key specific to the mobile terminal is generated using the stored common authentication key. A session security key is generated using the intermediate security key, for securing a communications session between the cellular network and the mobile terminal.

## Description

### Technical Field of the Invention

There is provided a method for security key management between a cellular network and a mobile terminal and an associated computer program, network entity and mobile terminal component (such as a SIM part or a User Equipment).

### Background to the Invention

Mobile communications are protected by cryptography (encryption, integrity protection), at least over the radio interface where they would otherwise be rather easy to intercept or impersonate (spoof). This cryptography uses keys, which exist both in the mobile device and somewhere in the network. For better security, these keys should be updated sufficiently often.

Agreeing an updated set of keys generally requires some communication between the network and the mobile device. In currently typical mobile or cellular communications, it might involve at least 32 bytes sent from the network to the device, and at least 4 bytes returned from the device to the network.

For mobile terminals (such as a mobile telephone) that may make several minutes worth of telephone calls between these rekeying events, or even consume data at megabits per second, the data transmitted for the purposes of rekeying constitutes a very small overhead. Machine-type communication devices, such as a smart water meter, or an alarm sensor are increasingly prevalent and use the cellular network to provide wireless connectivity. Such low-usage, low-power devices might only send a few bytes of data every day and may be powered by a battery that is intended to last 10 years or more. Rekeying these devices every day, for example, could easily more than double the total quantity of data communicated (as used herein, communicating can mean sending and/or receiving), significantly affecting battery life thereby.

To explain this problem in more detail, it is worth considering existing approaches for dealing with cryptographic keys in cellular networks. Second generation (2G), third generation (3G) and fourth generation (4G) mobile communications networks all use a long-lived key and at least one short-lived key. The long-lived key is typically fixed for the lifetime of the device and resides only in the Subscriber Identity Module (SIM) and in a network node called the Authentication Centre (AuC), both of which are highly secure environments. It should be very difficult for an attacker to extract the key from either of them. In GSM (2G), this key is called Kᵢ, while in 3G and 4G it is called K. There are one or two short-lived keys, which might also be called session keys. These are used for security over the radio interface. In GSM, the session key is called K_{c}, and it is used for encryption over the radio interface. In 3G, there is one session key called CK, used for encryption over the radio interface, and another called IK, used for integrity protection of signalling messages over the radio interface. At the device end, the session keys are created in the SIM and passed to the User Equipment (UE), where they are used. At the network end, the session keys are created in the AuC and passed to other network nodes, where they are used.

In the explanation below, the term "serving node" is used to refer to whichever network node handles the session keys. Typically, the serving node will be the endpoint of radio interface encryption, such that user data is encrypted in the mobile device and decrypted in the serving node, or vice versa. There may be more than one serving node.

Both 2G and 3G use an Authentication and Key Agreement (AKA) algorithm, which has two functions (implemented simultaneously). Firstly, the SIM authenticates itself to the network using the long-lived key. In 3G, the network also authenticates itself to the mobile terminal using the long-lived key. Secondly, new values of the short-lived session keys are derived from the long-lived key. In 4G the second, session key derivation part is a little more indirect and complex, but still essentially the same picture applies.

The short-lived session keys are desirably kept secret, so as to prevent eavesdropping for instance. Nonetheless, these keys are less highly protected than the long-lived key. Session keys are passed from the SIM to the UE and are more exposed than the long lived key for two reasons. Firstly, the UE is less secure than the SIM and secondly, an attacker with access to the interface between the SIM and the UE could read the keys in transit. Similarly at the network, session keys are passed from the AuC to the serving node or nodes, and are more exposed than the long lived key, for similar reasons as at the mobile terminal. The serving nodes are less secure than the AuC and an attacker with access to the signalling interface between the AuC and the serving nodes could read the keys in transit. For these reasons, session keys are typically updated quite frequently.

Strong authentication desirably includes a certain minimum amount of data transmission from the network to the mobile terminal and from the mobile terminal to the network. In all of 2G, 3G and 4G, for instance, a 16-byte value RAND is sent from the network to the mobile terminal, plus at least 16 bytes of other data in 3G and 4G and at least 4 bytes are sent back from mobile terminal to the network. Each authentication operation therefore involves a communications overhead that is significant for low-usage, low-power devices, such as those based on the Internet of Things (IoT) concept.

Thus, this standard mobile AKA architecture can be used with low-usage, low-power devices in two ways. In one approach, session keys can be updated as often as needed. However, this significantly increases overhead in the amount of data needing to be sent and received by the devices, resulting in significantly faster battery drain. Alternatively, session keys can be updated rarely, but at the cost of reduced security, because the same session key is in use for a long time. An approach that achieves high security without significantly increasing power usage is therefore highly desirable.

### Summary of the Invention

Against this background, there is provided a method for security key management between a cellular network and a mobile terminal in line with claim 1. There is also provided a computer program in accordance with claim 13, a network entity in line with claim 14 and a mobile terminal component (such as a UE or a secure/subscriber specific part, like a SIM) in accordance with claim 15. The invention may also be embodied in the form of programmable logic, firmware or other configurable system. Other preferred features are disclosed with reference to the claims and in the description below.

Security key management is provided between a cellular network and a mobile terminal. The mobile terminal and an authentication management node of the cellular network both store a common security key (such as the existing, K or Kᵢ). A key management message is communicated between the cellular network and the mobile terminal. In response to the communication, an intermediate security key specific to the mobile terminal is generated using the stored common security key. A session security key is generated using the intermediate security key, for securing (by cryptographic and/or integrity protection) a communications session between the cellular network and the mobile terminal.

The authentication management node may comprise one or more of: a Home Location Register (HLR); a Home Subscriber Server (HSS); and an Authentication Centre (AuC), for example. The mobile terminal typically comprises: a User Equipment (UE) part; and an associated secure or subscriber-specific part. Typically, the secure or subscriber-specific part comprises a Subscriber Identity Module (SIM) part (which may be a SIM, USIM, SIM application or another subscriber-specific component).

In contrast with the two-level hierarchy of keys in existing mobile communications security architecture, a three-level key hierarchy is proposed. The common security key is preferably a long-lived key, whilst the intermediate security key is typically short-lived by comparison, but normally longer-lived than existing session keys. However, the intermediate security key may be generated in the same way as an existing session key, for example including an AKA procedure based on the long-lived key. In other words, an authentication procedure may be carried out between the cellular network and the mobile terminal using the common security key in response to the key management message (as part of the intermediate key generation). One or more even shorter-lived session keys are generated from the intermediate key and used for session security (encryption/decryption and/or integrity protection). This may be more frequent than generation of the intermediate key. Advantageously, it need not require an AKA procedure. Authentication and session key generation can therefore be separated and/or decoupled in this way. The session key may also be generated in response to the key management message. Using three key hierarchical levels provides a way in which rekeying can be done often enough to satisfy security requirements but with significantly lowered data transmission requirements, greatly reducing battery drain.

By introducing a medium-term key that is preferably securely stored and allowing authentication to be separated from session key derivation, session keys can be updated as frequently as required with much smaller amounts of signalling data needing to be exchanged between the device and the network. Battery drain is significantly reduced thereby. It is still possible to carry out full authentication whenever required, but this can typically be much less frequent than expected in current mobile terminals.

The key management message could be an instruction or based on some key management value, such as a counter. The counter value may be agreed between the cellular network and the mobile terminal, particularly in a data-efficient way. For example, only one or more least significant bits of a digital value for the counter may be communicated. If the indication of the counter is performed a plurality of times (particularly, over a predetermined time interval), only one or more least significant bits of a digital value for the counter may be communicated for a first portion of the plurality of times and all bits of a digital value for the counter for a second portion of the plurality of times. The second portion being smaller than the first portion and the two portions are typically all of the plurality of times. The first portion may therefore be more than 50% of the plurality of times and optionally more than 60%, 70%, 75%, 80%, 90% or 95% of the plurality of times. The second portion may be no more than 50% and optionally no more than 40%, 30%, 25%, 20%, 10% and 5% of the plurality of times.

At the network, the intermediate security key is normally generated at the authentication management node. It may be stored at one or more of: the authentication management node; a proxy node for the authentication management node; and a serving node of the cellular network, having a Secure Execution Environment (SEE). Then, the intermediate security key may not be passed (from the authentication management node) to a network entity other than the network entity at which it is stored. The session security key may be generated at the authentication management node (in which case, it may be communicated from the authentication management node to a serving node of the cellular network to allow secured communication between the mobile terminal and the serving node) or it may generated at a serving node of the cellular network having a SEE (in which case, authentication vectors based on the common security key are communicated from the authentication management node to the serving node).

At the mobile terminal, the intermediate security key is typically generated at the secure and/or subscriber-specific part. Moreover, it may be stored at the secure and/or subscriber-specific part and it is preferably not passed to the UE part. In the preferred embodiment, the session security key is generated at the secure and/or subscriber-specific part. It may be passed to the UE part, particularly to allow secured communication between the mobile terminal and cellular network.

### Brief Description of the Drawing

The invention may be put into practice in various ways, one of which will now be described by way of example only and with reference to the accompanying drawing in which:

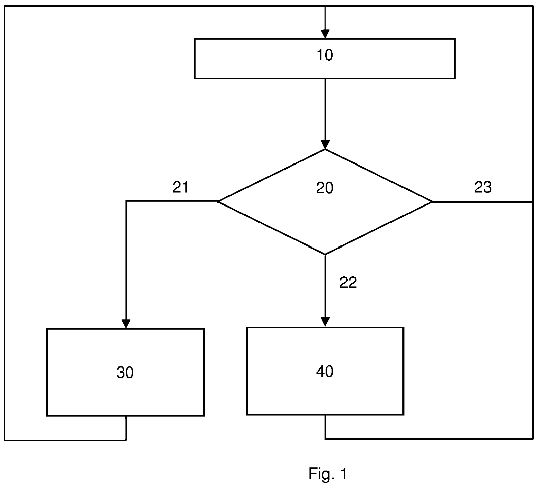

Figure 1 depicts a flowchart for security key management in a cellular network.

### Detailed Description of a Preferred Embodiment

Before discussing the specific details of the preferred embodiment, it is worth considering why radio interface keys are recurrently updated. The interval between updates typically relates either to the length of time that the key is used for, or the volume of data it is used to protect. For devices and/or services using low data volumes (such as Machine-Type Communication devices), the time factor is more relevant.

The time factor in turn splits into two considerations. Firstly, the longer a key is used, the more time an attacker has for cryptanalysis, in a time frame that still matters. For example, if it takes an attacker two weeks to break the encryption and determine the key, but the key is used for three weeks, then the key may be abused by the attacker for up to one week. It should be noted that, if an encrypted message can be recorded and the confidentiality of the message still matters even later (say a year later), then a key that requires much longer to be broken by cryptanalysis may be needed. Secondly, the longer a key is in place, the more time an attacker has to try and access it, for example by hacking into a device or whichever network node contains that key. As long as good cryptographic algorithms are used for the radio interface, good protection is provided against the first issue. So it is the second issue (the risk of extracting the key from an endpoint) that matters more for the types of devices under consideration.

The Authentication and Key Agreement (AKA) operation in current Third Generation Partnership Project (3GPP) cellular network systems today has been described above. As noted there, authentication and session key derivation are typically combined in a single operation.

A key idea disclosed herein is to introduce a medium-term key as well as long-term and short-term keys. In particular, the medium-term key may allow authentication and session key derivation to be separated. Whenever authentication is performed, a new medium-term (intermediate) key is derived from the long-term key. Whenever a new session key is demanded (to allow secured communication to take place), a new short-term session key is derived from the medium-term key. The medium term key is stored securely, for example, remaining in the SIM. Some form of key management message may be used to coordinate the derivation of new keys between the mobile terminal and cellular network.

The derivation of a short-term session key from a medium-term key is only a key derivation operation, not an authentication operation. As a result, much less data can be transmitted between the network and the mobile terminal. It should be noted that this does not necessarily reduce the data requirements for a single medium term key derivation plus authentication, but it greatly reduces the frequency of such a derivation.

Referring to Figure 1, there is depicted a flowchart for security key management in a cellular network. In a first step 10, a key management message is communicated from the cellular network to the mobile terminal. In response to the key management message, a decision step 20 takes place. On the basis of a first indication 21 in the key management message, a step 30 of generating a new intermediate security key is performed. On the basis of a second indication 22 in the key management message, a step 40 of generating a new session security key is performed. Once the step 30 and step 40 have been carried out, the process awaits the next communication of the key management message 10. Optionally, on the basis of a third indication 23 in the key management message, no further steps are performed and the process again awaits the next communication of the key management message 10. In an alternative approach, the key management message may be communicated from the mobile terminal to the cellular network. Also, the session security key need not be generated based on the key management message, although this is typically the case.

More generally, there may be considered a method for security key management between a cellular network and a mobile terminal. The mobile terminal and an authentication management node of the cellular network both store a common security (authentication) key. The method comprises: communicating a key management message between the cellular network and the mobile terminal, in response to which, an intermediate security (authentication) key specific to the mobile terminal is generated using the stored common security key; and generating a session security key using the intermediate security key, for securing a communications session between the cellular network and the mobile terminal. The authentication management node typically comprises one or more of: a Home Location Register, HLR; a Home Subscriber Server, HSS; and an Authentication Centre, AuC. The mobile terminal normally comprises: a User Equipment, UE, part; and an associated secure and/or subscriber-specific part, the generation of the intermediate security key being performed at the secure and/or subscriber-specific part.

The method may be implemented as a computer program (or an alternative hardware, software, firmware or combination thereof, as discussed herein). Also provided may be a network entity of a cellular network and/or a mobile terminal component (UE and/or SIM part), with structural features corresponding with the approach described herein.

Generating the session security key is optionally performed in response to communication of the key management message (although the form of the key management message may then be different, as will be discussed below). An authentication procedure is preferably (and optionally, only) carried out between the cellular network and the mobile terminal using the common security key in response to communication of the key management message and/or as part of the intermediate security key generation. The authentication procedure using the common security key may not be carried out when a session security key is generated and/or used.

The session key may be for encryption and/or decryption of the communications session between the cellular network and the mobile terminal. Alternatively, the session key may be for integrity protection of the communications session between the cellular network and the mobile terminal. There may be multiple session keys. Then, a first, session encryption key may for encryption and a second (different), session integrity key may be for integrity protection

A Cellular Internet of Things (IoT) configuration may be implemented in the following way. An AKA algorithm is used in which: (a) the long-lived key is used to authenticate device to network and network to device; and (b) a medium-term key is derived. The AKA algorithm is carried out infrequently, for example once per year. The AKA algorithm can be a standard 3G authentication algorithm, sending a full 128-bit RAND data item over the radio interface and deriving something similar to CK at the UE SIM. However, unlike 3G CK, the derived key (an intermediate security key) is not released by the SIM to the mobile device. It is held back on the SIM instead. This is similar to the approach discussed above.

The details of the interaction between the device and network for agreed key generation are now discussed. This is achieved using a key management message, which is a message specific to this purpose. In practice, there are therefore multiple types of key management message. One type triggers the derivation of the (medium term) intermediate security key from the (long term) common security key and one type triggers the derivation of the (short term) session security key from the intermediate security key. These two message types could be variants on the same basic message, but this need not be the case.

In the preferred embodiment, a key derivation counter (KDCTR) is used, which in this case is two bytes in length. KDCTR starts at 0 whenever a new medium-term key is created, and it will increment. Relatively frequently (once a day, for example), the mobile device and network agree a new incrementing value of KDCTR. There are various ways to do this, as will be discussed below. The mobile device passes the new KDCTR value to the SIM. If the new KDCTR is greater than the previous one, then the SIM derives a new session key from the medium-term key and KDCTR. The SIM then returns the session key to the mobile device (the UE). The session key is then used for encryption on the radio interface. If the new KDCTR is less than or equal to the previous one, the SIM rejects it. That way, even direct control the mobile device (UE) may not be sufficient to make the SIM release either previous or future values of the session key. As well as the session key used for encryption on the radio interface, there may be another session key used for integrity protection of signalling messages (corresponding with IK in existing 3G implementations).

Unlike with authentication operations in 3G and 4G, it is not necessary to integrity protect the agreement of the new KDCTR value. An attacker might be able to trick the endpoints into raising KDCTR to its maximum value, but the denial of service that that would create would be very short lived and immediately rectified with a new full authentication operation.

KDCTR is desirably agreed between the device and the serving node. There are a number of ways that this might be done. For example, it could be sent from the device to the serving node. More preferably (from a device battery perspective), it could be sent from the serving node to the device. Some data efficiency optimisation may be possible, such as: only a few least significant bits are sent from one end to the other, and it is assumed that the remaining bits can be kept synchronised; only a few least significant bits are usually sent from one end to the other, and occasionally a slightly longer message is sent to update the remaining bits; and some sort of already existing packet counter or similar value may be (partially) re-used as the KDCTR.

The above describes an implementation at the mobile device end, but the possibility of key leakage at the network end is also considered. A couple of possible ways to approach this are as follows. In a first approach, the medium term key is held back by the AuC, or by the HLR (the AuC is typically co-located with the HLR and is often considered a part of the HLR), or by a secure proxy sat in front of the HLR. Then, the short lived session keys are derived here when needed and sent to the serving node that needs them. In this way, the serving node never receives the medium term key, only the short term session key. This demands more signalling between the HLR and the serving node, but that may still be acceptable. In a second approach, the serving node includes a secure execution environment (SEE, which could even be a SIM). The medium term key is stored there (optionally, only). The session key derivation is done there. As with the mobile-device-to-SIM interface, the SEE only accepts KDCTR values that are higher than previous ones. If an SEE is provided in the serving node, then the authentication vectors including the medium term key are ideally sent encrypted from the HLR to the serving node, and need only be decrypted in the SEE.

In a generalised sense, such approaches may be considered as follows. Communicating the key management message preferably comprises communicating an indication of a key generation value between the cellular network, particularly a serving node, and the mobile terminal. Advantageously, the key generation value is a counter. Then, the step of communicating the indication of the counter may comprise communicating only one or more least significant bits of a digital value for the counter. Communicating the indication of the counter is optionally performed a plurality of times. Then, it may comprise: communicating only one or more least significant bits of a digital value for the counter for a first portion of the plurality of times; and communicating all bits of a digital value for the counter for a second portion of the plurality of times, the second portion being smaller than the first portion. The counter is optionally based on a counter used by the cellular network for another purpose. Beneficially, the step of generating the session security key is performed when the indication of the key generation value indicates that the key generation value is increased. The intermediate security key may be generated when the indication of the counter identifies that the counter meets a predetermined threshold value. The counter is preferably reset to an initialisation value (such as zero) when the intermediate security key is generated.

In one preferred embodiment, the generation of the intermediate security key is performed at the authentication management node. The intermediate security key may be stored at one or more of: the authentication management node; a proxy node for the authentication management node; and a serving node of the cellular network, having a Secure Execution Environment, SEE. The intermediate security key may not be passed to a network entity other than the network entity at which it is stored. The session security key may be generated at the authentication management node or at a serving node of the cellular network having a SEE. Where the session security key is generated at the authentication management node, the session security key may be communicated from the authentication management node to a serving node of the cellular network to allow secured communication between the mobile terminal and the serving node. Where the session security key is generated at the serving node having a SEE, authentication vectors based on the common security key may be communicated from the authentication management node to the serving node

In another preferred embodiment, the intermediate security key is stored at the secure and/or subscriber-specific part. Then, the intermediate security key may not be passed to the UE part. Additionally or alternatively, the session security key is generated at the secure and/or subscriber-specific part. Then, the session key may be passed to the UE part to allow secured communication between the mobile terminal and cellular network.

Although specific embodiments have now been described, the skilled person will understand that various modifications and variations are possible. Also, combinations of any specific features shown with reference to one embodiment or with reference to multiple embodiments are also provided, even if that combination has not been explicitly detailed herein.

The key management message may be a message normally used for some other purpose and used for this purpose in addition. The key management message need not be a counter, or it may be a counter used for another purpose. The input value used for short-term key derivation does not need to be an incrementing counter. It could be a random value, for instance. A counter is simpler, though, and likely to be most efficient.

The functionality described herein with respect to a SIM need not be implemented only on a SIM. The skilled person will appreciate that alternatives to a SIM are possible. Some or all parts of the functionality described herein with respect to a SIM could be implemented on another component of the mobile terminal, for example in cases where the mobile terminal does not include a SIM part. In particular, the same principle as applied to a SIM could apply if any other secure computation component were used (such as a Trusted Execution Environment or Secure Element) as part of the mobile terminal.

In principle, the session key or keys could be retained in the SIM rather than passing them to the UE. This may mean, though, that all of the encryption, decryption, integrity protection or integrity verification of user traffic or signalling messages would then be carried out by the SIM. In turn, all of the user traffic (which can be at a high data rate) would be passed in real time over the UE-to-SIM interface and back again. Current SIM devices are not equipped to handle such high transfer and processing rates, so this may not currently be a practical approach.

## Claims

1. A method for security key management between a cellular network and a mobile terminal, wherein the mobile terminal and an authentication management node of the cellular network both store a common security key, the method comprising:
communicating a key management message between the cellular network and the mobile terminal, in response to which, an intermediate security key specific to the mobile terminal is generated using the stored common security key; and
generating a session security key using the intermediate security key, for securing a communications session between the cellular network and the mobile terminal.

2. The method of claim 1, wherein the step of generating the session security key is performed in response to communication of the key management message.

3. The method of claim 1 or claim 2, further comprising:
carrying out an authentication procedure between the cellular network and the mobile terminal using the common security key in response to communication of the key management message; and
wherein the authentication procedure using the common security key is not carried out when a session security key is generated and/or used.

4. The method of any preceding claim, wherein communicating the key management message comprises communicating an indication of a key generation value between the cellular network and the mobile terminal.

5. The method of claim 4:
wherein communicating the key management message comprises communicating an indication of a key generation value from a serving node of the cellular network to the mobile terminal and/or;
wherein the key generation value is a counter and wherein the step of communicating the indication of the counter comprises communicating only one or more least significant bits of a digital value for the counter.

6. The method of claim 5, wherein the step of communicating the indication of the counter is performed a plurality of times and comprises: communicating only one or more least significant bits of a digital value for the counter for a first portion of the plurality of times; and communicating all bits of a digital value for the counter for a second portion of the plurality of times, the second portion being smaller than the first portion.

7. The method of claim 5 or claim 6:
wherein the key generation value is a counter and wherein the counter is based on a counter used by the cellular network for another purpose; and/or
wherein the step of generating the session security key is performed when the indication of the key generation value indicates that the key generation value is increased; and/or
wherein the key generation value is a counter and wherein the intermediate security key is generated when the indication of the counter identifies that the counter meets a predetermined threshold value; and/or
wherein the key generation value is a counter and wherein the counter is reset to an initialisation value when the intermediate security key is generated.

8. The method of any preceding claim, wherein the generation of the intermediate security key is performed at the authentication management node, the method further comprising:
storing the intermediate security key at one or more of: the authentication management node; a proxy node for the authentication management node; and a serving node of the cellular network, having a Secure Execution Environment, SEE; and
wherein the intermediate security key is not passed to a network entity other than the network entity at which it is stored.

9. The method of claim 9, wherein the step of generating the session security key is performed at the authentication management node or at a serving node of the cellular network having a Secure Execution Environment, SEE; and
wherein the step of generating the session security key is performed at the authentication management node, the method further comprising communicating the session security key from the authentication management node to a serving node of the cellular network to allow secured communication between the mobile terminal and the serving node; or
wherein the step of generating the session security key is performed at the serving node having a SEE, the method further comprising communicating authentication vectors based on the common security key from the authentication management node to the serving node

10. The method of any preceding claim, wherein the authentication management node comprises one or more of: a Home Location Register, HLR; a Home Subscriber Server, HSS; and an Authentication Centre, AuC; and/or
wherein the mobile terminal comprises: a User Equipment, UE, part; and an associated secure or subscriber-specific part, the generation of the intermediate security key being performed at the secure or subscriber-specific part.

11. The method of claim 10, further comprising storing the intermediate security key at the secure or subscriber-specific part, the intermediate security key not being passed to the UE part; and/or
wherein the step of generating the session security key is performed at the secure or subscriber-specific part, the session security key being passed to the UE part to allow secured communication between the mobile terminal and cellular network.

12. The method of any preceding claim, wherein the step of generating a session security key comprises:
generating a session encryption key using the intermediate security key, for encryption and/or decryption of the communications session between the cellular network and the mobile terminal; and
generating an integrity protection key using the intermediate security key, for integrity protection of the communications session between the cellular network and the mobile terminal.

13. A computer program, configured when operated by a processor to perform the method of any preceding claim.

14. A network entity of a cellular network, configured to operate in accordance with the method of any one of claims 1 to 10 or 12.

15. A mobile terminal component, configured to operate in accordance with the method of any one of claims 1 to 8 or 10 to 12.
